# EUROPEAN PATENT SPECIFICATION

(11) **EP 0 507 346 B1**
(45) Date of publication and mention of the grant of the patent: **04.09.1996**
(21) Application number: 92105880.6
(22) Date of filing: 06.04.1992
(51) Int. Cl.: H04N 5/208

(54) **Image signal outline enhancing device**
Vorrichtung zur Verbesserung der Kontouren eines Bildsignals
Dispositif d'amélioration du contour d'un signal d'image

(30) Priority: 04.04.1991 JP 71523/91
(43) Date of publication of application: 07.10.1992
(73) Proprietor: MATSUSHITA ELECTRIC INDUSTRIAL CO., LTD., Kadoma-shi, Osaka-fu, 571 (JP)
(72) Inventor: Izawa, Yosuke, Ibaraki-shi, Osaka-fu (JP); Okumura, Naoji, Mino-shi, Osaka-fu (JP)
(74) Representative: Eisenführ, Speiser & Partner

(56) References cited:
- EP-A- 0 263 617
- EP-A- 0 360 559
- PATENT ABSTRACTS OF JAPAN vol. 13, no. 463 (E-833)19 October 1989 & JP-A-11 79 573 ( CANON).

## Description

The present invention relates to an image signal outline enhancing device for enhancing an outline of image formed by an image signal having leading and trailing-edge portions and a pulse portion between said leading and trailing-edge portions, said image signal having a plurality of sampled digital data which is sampled in a predetermined sampling interval of period t; comprising an interpolating means for estimating a digital data between subsequent two of said sampled digital data and for inserting said estimated digital data; and an outline enhancing means for enhancing said image signal by making said leading and trailing-edge portions steeper.

JP-A-11 79 573 already shows an image processor having such an image signal outline enhancing device.

The present invention particularly relates to an outline enhancing device for use in a television receiver, a videotape recorder or a video projector and, more particularly, in connection with an image signal having a very high frequency as a color difference signal, for a sharper image reproduction.

As demands for the quality of image reproduced by television has increased in recent years, image signal outline enhancing devices have become increasingly important as a means for sharpening the image reproduced on the CRT screen by enhancing the leading and trailing edges of such an image signal having a very high frequency as a color difference signals.

One type of such device is as described below, with reference to the accompanying figures.

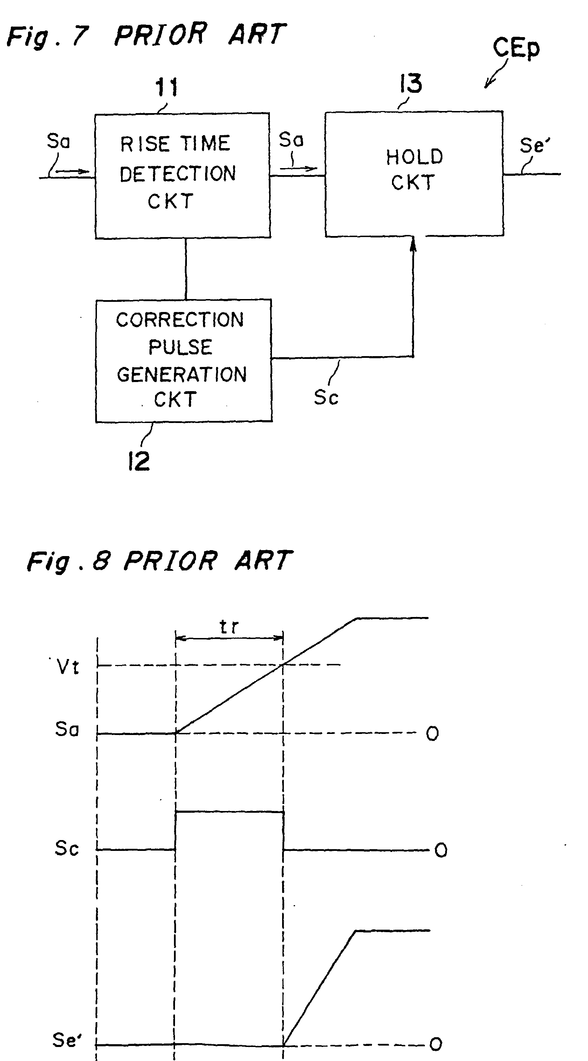

Fig. 7 and Figs. 8 and 9 are, respectively, a block diagram and graphs showing the input/output relationship in an example of a conventional image signal outline enhancing device. As shown in Fig. 7, the outline enhancing device CEp includes a rise time detecting circuit 11 which detects the rise time tr required for the color difference signal Sa to rise from the zero level to its steady peak amplitude level, a correction pulse generation circuit 12 for generating a correction pulse Sc for the same period as the detected rise time tr, and a hold circuit 13 for keeping the output signal Se' at the zero level during the correction pulse Sc is generated.

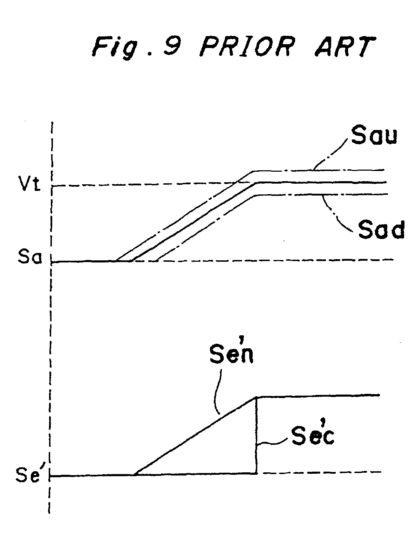

A color difference signal enhancing device CEp thus constructed operates as described below, with references to Figs. 8 and 9. In Fig. 8, the rise time detecting circuit 11 detects the rise time tr which is the period from a time when the when the color difference signal Sa starts to rise to a time when the signal Sa exceeds the threshold level Vt. The correction pulse generation circuit 12 produces the correction pulse Sc for the period tr. During the correction pulse Sc is produced, the hold circuit 13 holds the output signal Se' at the zero level. After the period tr, the hold circuit enables the output signal Se' to rise. As a result, the output signal Se' rapidly rises to the steady level with a greater gradient than that of the difference signal Sa.

However, when the color difference signal Sa has almost same the peak amplitude level as the threshold level Vt, the rise time detecting circuit 11 can not detect the rise time tr correctly. As shown in Fig. 9, since the color difference signal Sa makes small, rapid variations in a waveform caused by mechanical vibrations, fluctuations in supply voltage, control-system instability, and other causes, the signal Sa also fluctuates or jitters. When the waveform fluctuates up, the color difference signal Sa shifts to a position above the threshold level Vt as indicated in an imaginary line Sau. When fluctuated down, the signal Sa shifts to a position below the threshold level Vt as indicated in an imaginary line Sad. Since the rise time detecting circuit 11 alternatively detects or does not detect the rise time tr according to such shifted positions, the correction pulse generation circuit 12 also alternatively produces or does not produce the correction pulse Sc, accordingly. Therefore, the produced output signal Se' alternatively shows a non-corrected waveform Se'n and a corrected waveform Se'c as shown Fig. 8, causing the signal Se' to jitter, too.

EP-A-263 617 shows a video signal enhancement system using adaptive digital signal processing. In this system, the outline of the video signal is enhanced by inserting interpolated data between original sample points. The interpolated data is determined by comparing three sample points and by taking the average amplitude, or by simply taking the amplitude at one point.

It is an object of the present invention to avoid the disadvantages of prior art devices and to provide an improved image signal outline enhancing device.

In order to achieve the afore-mentioned objective an image signal outline enhancing device including an interpolating means as defined above is characterized by said interpolating means comprising an average means for producing an averaged digital data having an average value of subsequent two of said sampled digital data; and a select means for alternatively selecting either of said sampled digital data and said averaged digital data at every period t/2 and producing an interpolated image signal combined from said selected sampled and averaged digital data, whereby said image signal is interpolated such that said interpolated signal includes said averaged digital data between subsequent sampled digital data.

Preferable embodiments are defined in the dependent claims.

Detailed features of the present invention will become clear from the following description taken in conjunction with the preferred embodiment thereof with reference to the accompanying drawings throughout which like parts are designated by like reference numerals, and in which:
Fig. 1 is a block diagram of an image signal outline enhancing device according to an preferred embodiment of the present invention;
Fig. 2 is a graph showing wave forms of signals observed at various places in the image signal outline enhancing device shown in Fig. 1;
Fig. 3 is an electric circuit diagram showing the details of the interpolation filter circuit shown in Fig. 1;
Fig. 4 is a graph showing wave forms of signals observed at various places in the interpolation filter circuit shown in Fig. 3;
Fig. 5 is a block diagram of the outline enhancing device shown Fig. 1;
Figs. 6a and 6b are graphs showing forms of signals observed at various places in the outline enhancing circuit shown in Fig. 5;
Fig. 7 is a block diagram of an example of a conventional color difference signal enhancing device;
Fig. 8 is a graph showing wave forms of signals observed at various places in the conventional color difference signal enhancing device shown in Fig. 7; and
Fig. 9 is a graph showing wave forms of signals observed at various places in the conventional color difference signal enhancing device shown in Fig. 7.

### DETAILED DESCRIPTION OF THE PREFERRED EMBODIMENTS

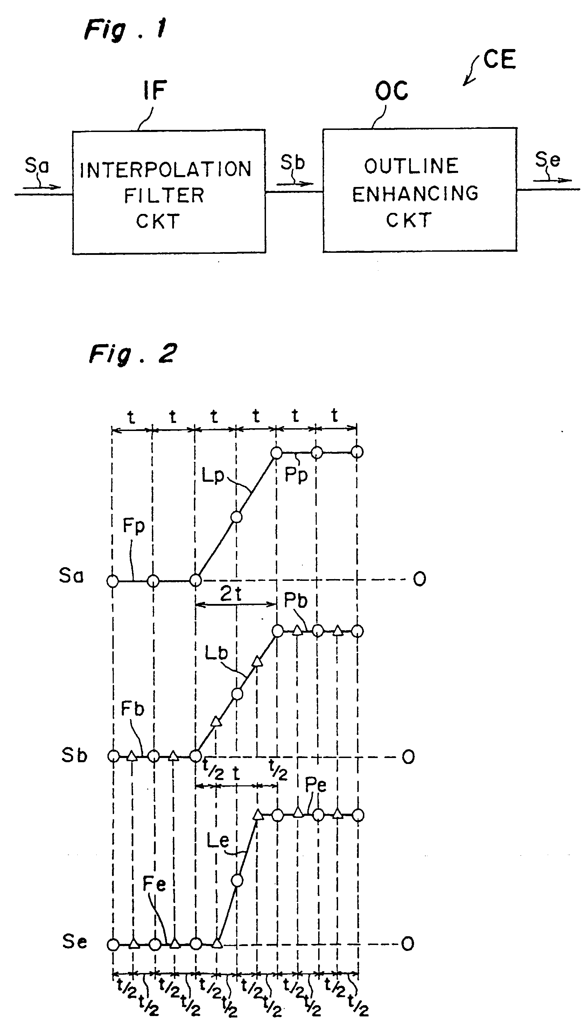

Referring to Fig. 1, a block diagram of a color difference signal enhancing device CE according to a preferred embodiment of the present invention is shown. The color difference signal enhancing device CE receives a color difference signal Sa in digital form sampled in a predetermined interval t. In Fig. 2, each of small circles represents a sampled digital data of the color difference signal Sa which has a leading-edge portion Lp, a pulse portion Pp, and a trailing-edge portion (not shown).

The color difference signal enhancing device CE comprises an interpolation filter circuit IF which interpolates the color difference signal by inserting estimated digital data between two subsequent sampled digital data of the color difference signal Sa and produces an interpolated signal Sb. The interpolated signal Sb also has a leading-edge portion Lb, a pulse portion Pb, and a trailing-edge portion (not shown). When signals Sa and Sb are compared, signal Sb has a greater number of digital data per unit time, resulting in closer interval of digital data. The device CE further comprises an outline enhancing circuit OC which produces an outline enhanced signal Se based on the interpolated signal Sb. The outline enhanced signal Se also has a leading-edge portion Le, a pulse portion Pe, and a trailing-edge portion (no shown). When signals Sb and Se are compared, signal Se has edge potions, e.g., Le, slanted at a greater gradient.

Referring to Fig. 2, the operation of the color difference signal enhancing device CE thus construct is described below. A color-bar test pattern image in which a blue bar and a red bar are closely placed is considered. A color difference signal Sa of a line scanned across this color bar image is partially shown in Fig. 2, wherein a flat portion Fp before the leading-edge portion Lp represents a blue bar, a leading-edge portion Lp represents a boarder between the blue and red bars. In the example shown in Fig. 2, signal Sa has a leading-edge portion Lp which continues for two sampling periods, whereas signal Se has is one sampling period. Although the color difference signal Sa is shown as a positive going signal in this embodiment, the present invention is applicable also to a negative going signal.

The interpolation filer circuit IF estimates a digital data which is inserted between two subsequent digital data the color difference signal Sa, as indicated by a small triangle. Thus, the interpolation filter circuit IF produces the interpolated signal Sb. Thus, the interpolated signal Sb has digital data occurring twice as much as that in the signal Sa, meaning that the digital data occurring interval is 1/2t.

The outline enhancing circuit OC produces the enhanced signal Se based on the interpolated signal Sb such that the gradient of the leading-edge portion Le is made steeper than that of the signal Sb. In other wards, the leading-edge portion Le of the signal Se occupies only a period t, whereas the leading edge portion Lb of signal Sb occupies a period 2t. Thus, the signal Se rises in a half period of that of the color difference signal Sa, resulting in enhancement of the outline. The details of the outline enhancing circuit OC is disclosed in the prior E.P. patent application No. 92 105 092.8 filed March 25, 1992 by the same applicants as the present application.

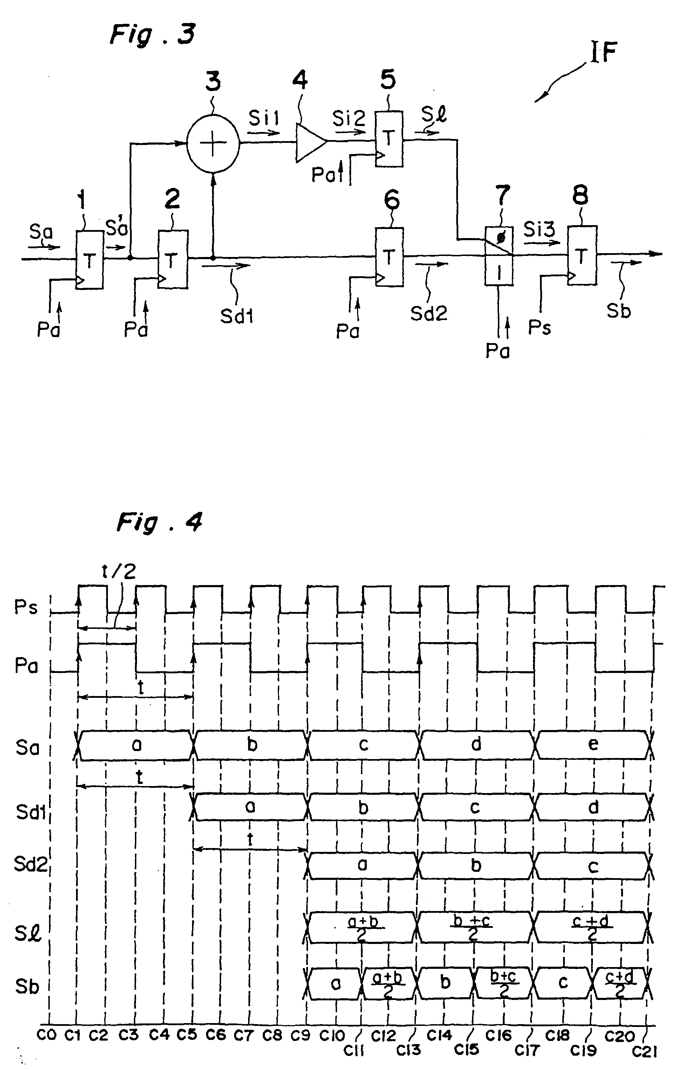

Referring to Fig. 3, an electric circuit of the interpolation filer circuit IF according to the present invention is shown. The interpolation filer circuit IF comprises a firs flip-flop circuit 1 which latches the color difference signal Sa in response to a leading-edge of a clock signal Pa and produces a delayed color difference signal Sa' which is delayed by a period t. A second flip-flop circuit 2 latches the signal Sa' in response to the clock signal Pa and produces a firs delayed color difference signal Sdl which is delayed by a period t. An adder 3 adds the signal Sa' to the signal Sdl and produces a first intermediate signal Sil. A multiplier 4 multiplies the first intermediate signal Sil by 1/2 and produces a second intermediate signal Si2 which is equal to an average between two subsequent sampled digital data. A third flip-flop circuit 5 latches the signal Si2 in response to the clock signal Pa, and produces a second latched color difference signal Sℓ. A third flip-flop circuit 6 latches the first signal Sdl and produces a second delayed color difference signal Sd2. A selector 7 selects the signal Sℓ when the signal Pa is 0 (low) and the signal Sd2 when the signal Pa is 1 (high), and produces a third intermediate signal Si3. Thus, in the selector 7, an estimated digital data is inserted between two subsequent sampled digital data, so that selector 7 produces the digital data at the rate of t/2, thus effecting the interpolation. A fifth flip-flop circuit 8 latches the third intermediate signal Si3 in response to a system clock signal Ps and produces the interpolated signal Sb.

A further detailed description of the outline enhancing device OC is given in the above mentioned E. P. patent application No. 92 105 092.8.

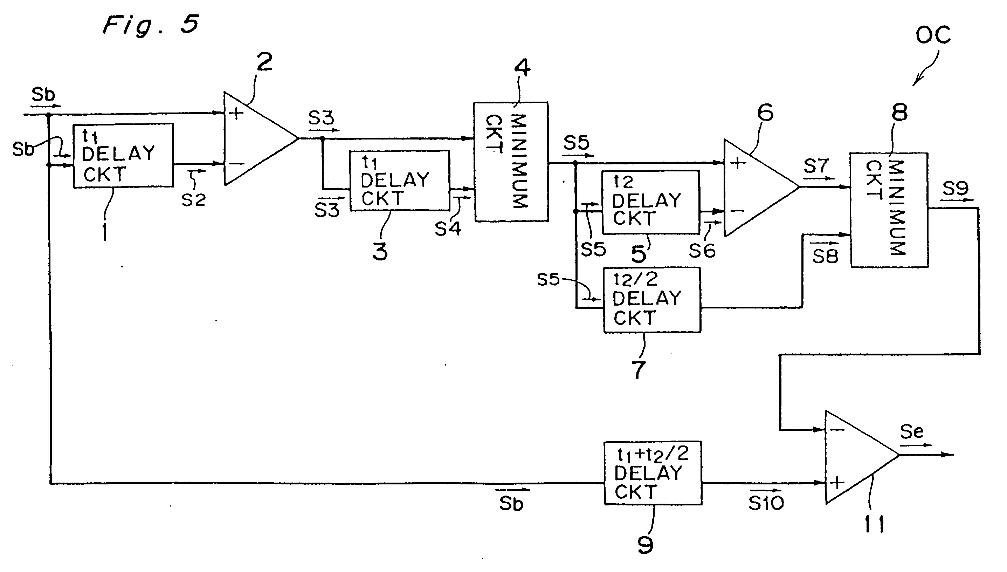

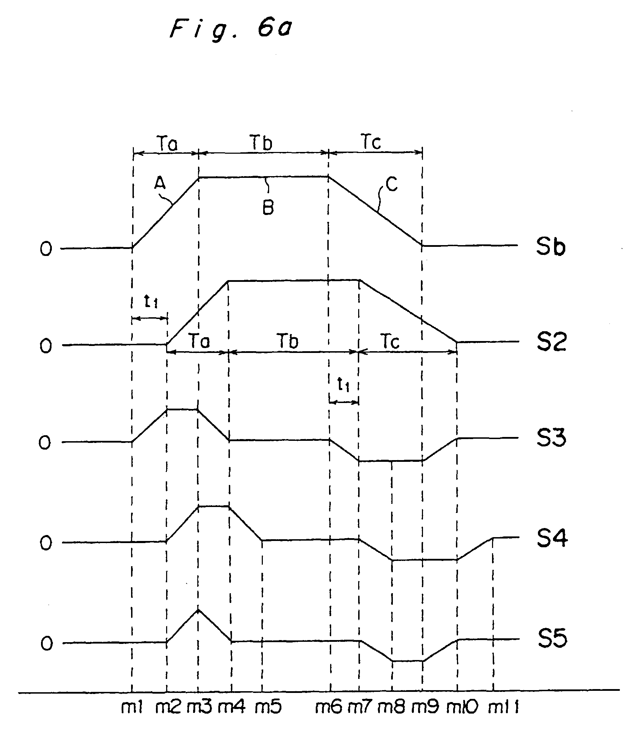

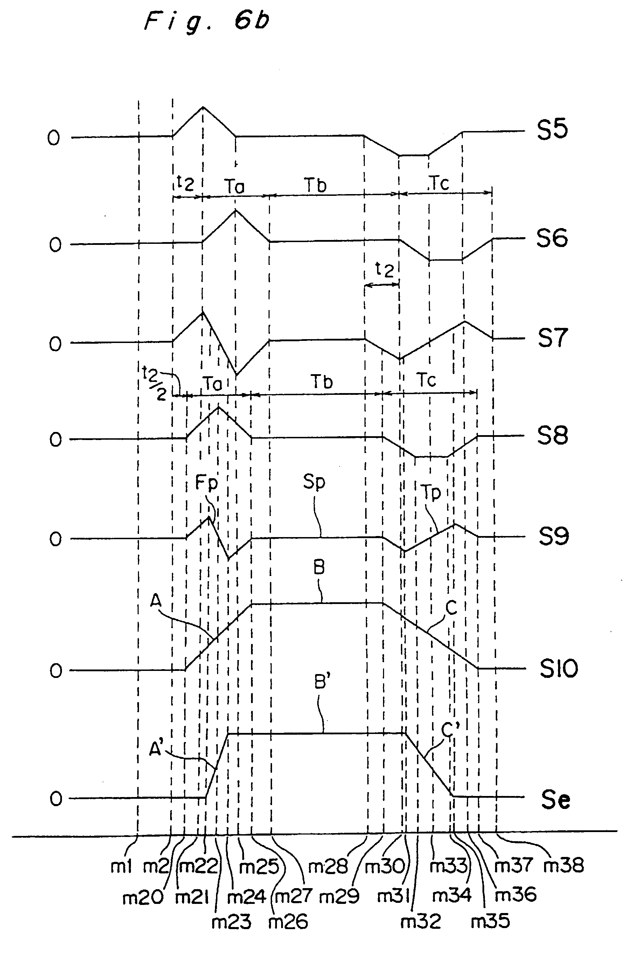

The outline enhancing circuit OC operates as follows. A first delay circuit 1 (Fig. 5) delays the interpolated signal Sb (Fig. 6a) by a first delay period t1 and produces a delayed interpolated signal S2 (Fig. 6a). A first subtracter 2 (Fig. 5) subtracts the signal S2 from the signal Sb and produces a primary differentiated signal S3 (Fig. 6a). A second delay circuit 3 (Fig. 5) delays the signal S3 by a first delay period t1 and produces a delayed primary differentiated signal S4 (Fig. 6a). A first minimum circuit 4 (Fig. 5) selects either of signals S3 and S4 whose absolute amplitude is smaller than the other and produces a minimum primary differentiated signal S5 (Fig. 6a). And when the polarities of signals S3 and S4 are different from each other, zero amplitude is employed as signal S5. A third delay circuit 5 (Fig. 5) delays the signal S5 by a second delay period t2 and produces a first delayed minimum primary differentiated signal S6 (Fig. 6b). A second subtracter 6 (Fig. 5) subtracts the signal S6 from the signal S5 and produces a second differentiated signal S7 (Fig. 6b). A fourth delay circuit 7 (Fig. 5) delays the signal S5 by the second delay period of t2/2 and produces a second delayed minimum primary differentiated signal S8 (Fig. 6b). A second minimum circuit 8 (Fig. 5) selects either of signal S7 and S8 whose absolute amplitude is smaller than the other and produces a correction signal S9 (Fig. 6b) with the same polarity as that of the signal S7. The fifth delay circuit 9 (Fig. 5) delays the interpolated signal Sb by a period of t1+t2/2 and produces a second delayed interpolated signal S10 (Fig. 6b) which is synchronized with the signal S9. A third subtracter 11 (fig. 5) subtracts the signal S9 from the signal S10 and produces an output signal Se. Thus, the signal Se has the leading and railing edges which are more steep than those of the interpolated signal Sb, as shown.

Since the outline enhancing circuit OC does no compare the amplitude of the color difference signal Sa with the predetermined threshold V, the circuit OC can enhance the outline of the signal Sa stably and correctly under no influence of the jittering of the color difference signal Sa.

According to the present invention, it is possible to further enhance the outline of an image which already has a rather sharp edge such that the leading edge portion Lp of the image falls within a period t, because the interpolation filter circuit IF is provided before the outline enhancing circuit OC to provide an estimated digital data between two subsequent sampled digital data.

According to the color difference signal enhancing device CE of the preferred embodiment of present invention, it is possible to enhance the outline of any level of color difference signal such thatthe interpolation filer circuit IF interpolates and increases the digital data within the sampling interval of the signal and that the outline enhancing circuit OC improves the steepness of the leading and railing edges of the signal based on the interpolated digital data.

## Claims

1. An image signal outline enhancing device (CE) for enhancing an outline of image formed by an image signal (Sa') having leading and trailing-edge portions (Lp) and a pulse portion (Pp) between said leading and trailing-edge portions (Lp), said image signal having a plurality of sampled digital data which is sampled in a predetermined sampling interval of period t;
comprising an interpolating means (IF) for estimating a digital data between subsequent two of said sampled digital data and for inserting said estimated digital data; and
an outline enhancing means (OC) for enhancing said image signal (Sa') by making said leading and trailing-edge portions (Lp) steeper;
characterized by
said interpolating means (IF) comprising:
- an average means (2, 3, 4 and 5) for producing an averaged digital data (SI) having an average value of subsequent two of said sampled digital data; and
- a select means (7) for alternatively selecting either of said sampled digital data and said averaged digital data (SI) at every period t/2 and producing an interpolated image signal (Sb) combined from said selected sampled and averaged digital data, whereby said image signal (Sa') is interpolated such that said interpolated signal (Sb) includes said averaged digital data between subsequent sampled digital data.

2. An image signal outline enhancing device (CE) as claimed in claim 1,
characterized by said average means (2, 3, 4 and 5) comprising:
- first delaying means (2) for delaying said sampled digital data (Sa') by said period t and producing a first delayed sampled digital data (Sdl);
- adding means (3) for adding said sampled digital data (Sa') to said first delayed sampled digital data (Sdl) and producing an added sampled digital data (Sil); and
- multiplying means (4) for multiplying said added sampled digital data (Sil) by 1/2 to take the average of said sampled digital data (Sa') and said first delayed sampled digital data (Sdl) and producing an averaged sampled digital data (Si2), whereby subsequent two sampled digital data are averaged.

3. An image signal outline enhancing device (CE) as claimed in claim 2 further comprising:
- second delaying means (6) for delaying said first delayed sampled digital data (Sd1) by the period t and producing a second delayed sampled digital data (Sd2), said second delayed sampled digital data (Sd2) being delayed for a period 2t from said sampled digital data; and
- third delaying means (5) for delaying said averaged sampled digital data (Si2) by the period t for producing a delayed averaged sampled digital data (S1), said delayed averaged sampled digital data (S1) being delayed for the period 2t from said image signal (Sa'), whereby said select means (7) alternatively selects either of said second delayed sampled digital data (Sd2) and said delayed averaged sampled digital data (S1) at every period t and produces said interpolated image signal (Sb).

## Patentansprüche

1. Vorrichtung (CE) zur Verbesserung der Konturen eines Bildsignals (Sa'), das ansteigende und abfallende Flanken (Lp) und einen dazwischen liegenden Impulsabschnitt (Pp) aufweist und von dem in einer vorbestimmten Abtastperiode t eine Mehrzahl von digitalen Abtastwerten abgetastet werden;
mit einer Interpolationseinrichtung (IF) zum Ermitteln eines digitalen Datenwertes zwischen zwei aufeinanderfolgenden digitalen Abtastwerten und zum Einfügen eines solchen ermittelten digitalen Datenwertes; und
mit einer Konturenverbesserungseinrichtung (OC) zum Verbessern des Bildsignals (Sa') durch Steilermachen der ansteigenden und abfallenden Flanken (Lp);
dadurch gekennzeichnet, daß
die Interpolationseinrichtung (IF) folgende Einheiten enthält:
- eine Mittelwertbildungseinheit (2, 3, 4 und 5) zum Erzeugen eines digitalen Mittelwertes (SI) aus zwei aufeinanderfolgenden digitalen Abtastwerten; und
- eine Auswahleinheit (7) zum abwechselnden Auswählen entweder des digitalen Abtastwertes oder des digitalen Mittelwertes für jeden Zeitraum t/2 und zum Erzeugen eines interpolierten Bildsignals (Sb), das aus ausgewählten digitalen Abtastwerten und digitalen Mittelwerten zusammengesetzt ist, wobei das Bildsignal (Sb) die digitalen Mittelwerte zwischen aufeinanderfolgenden digitalen Abtastwerten aufweist.

2. Vorrichtung (CE) zur Verbesserung der Konturen eines Bildsignals nach Anspruch 1, dadurch gekennzeichnet, daß
die Mittelwertbildungseinheit (2, 3, 4 und 5) folgende Mittel aufweist:
- erste Verzögerungsmittel (2) zum Verzögern der digitalen Abtastwerte (Sa') um die Periode t zur Erzeugung erster verzögerter digitaler Abtastwerte (Sd1);
- Addiermittel (3) zum Addieren der digitalen Abtastwerte (Sa') und der ersten verzögerten digitalen Abtastwerte (Sd1) zur Erzeugung digitaler Abtastsummenwerte; und
- Mulipliziermittel (4) zum Multiplizieren der digitalen Abtastsummenwerte (Si1) mit 1/2, um die Mittelwerte aus den digitalen Abtastwerten (Sa') und den ersten verzögerten digitalen Abtastwerten (Sd1) zu bilden und digitale Abtastmittelwerte (Si2) zu erzeugen, die die Mittelwerte zwischen zwei digitalen Abtastwerten darstellen.

3. Vorrichtung (CE) zur Verbesserung der Konturen eines Bildsignals nach Anspruch 2, weiter gekennzeichnet durch
- zweite Verzögerungsmittel (6) zum Verzögern der ersten verzögerten digitalen Abtastwerte (Sd1) um die Periode t zur Erzeugung zweiter verzögerter digitaler Abtastwerte (Sd2), wobei die zweiten verzögerten digitalen Abtastwerte (Sd2) gegenüber den digitalen Abtastwerten um einen Zeitraum 2t verzögert sind; und
- dritte Verzögerungsmittel (5) zum Verzögern der digitalen Abtastmittelwerte (Si2) um den Zeitraum t zur Erzeugung von verzögerten digitalen Abtastmittelwerten (Sℓ), die um einen Zeitraum 2t gegenüber dem Bildsignal (Sa') verzögert sind, wobei die Auswahleinheit (7) abwechselnd entweder den zweiten verzögerten digitalen Datenwert (Sd2) oder den verzögerten digitalen Abtastmittelwert (Sℓ) für jede Periode t auswählt und das interpolierte Bildsignal (Sb) erzeugt.

## Revendications

1. Dispositif d'amélioration du contour d'un signal d'image (CE) pour améliorer le contour d'une image formée par un signal d'image (Sa') ayant des parties de front avant et arrière (Lp) et une partie à impulsion (Pp) entre lesdites parties de front avant et arrière (Lp), ledit signal d'image ayant une multitude de données numériques échantillonnées qui est échantillonnée dans un intervalle d'échantillonnage donné de période t;
comprenant un moyen d'interpolation (IF) pour estimer une donnée numérique entre deux données ultérieures desdites données numériques échantillonnées pour insérer ladite donnée numérique estimée; et
un moyen d'amélioration de contour (OC) pour améliorer ledit signal d'image (Sa') en rendant plus raides lesdites parties des front avant et arrière (Lp);
caractérisé en ce que :
ledit moyen d'interpolation (IF) comprend :
- un moyen de formation de moyenne (2, 3, 4 et 5) pour produire une donnée numérique moyenne (SI) ayant la valeur moyenne de deux données ultérieures desdites données numériques échantillonnées; et
- un moyen de sélection (7) pour sélectionner alternativement l'une ou l'autre de ladite donnée numérique échantillonnée et de ladite donnée numérique moyenne (SI) à chaque période t/2 et pour produire un signal d'image interpolé (Sb) combiné à partir desdites données échantillonnée sélectionnée et numérique moyenne, d'où il résulte que ledit signal d'image (Sa') est interpolé de façon que ledit signal interpolé (Sb) comprenne ladite donnée numérique moyenne entre données ultérieures numériques échantillonnées.

2. Dispositif d'amélioration du contour d'un signal d'image (CE) selon la revendication 1,
caractérisé en ce que ledit moyen de formation de moyenne (2, 3, 4 et 5) comprend :
- un premier moyen à retard (2) pour retarder ladite donnée numérique échantillonnée (Sa') suivant ladite période t et produire une première donnée numérique échantillonnée retardée (Sd1);
- un moyen d'addition (3) pour ajouter ladite donnée numérique échantillonnée (Sa') à ladite première donnée numérique échantillonnée retardée (Sd1) et produire une donnée numérique échantillonnée ajoutée (SiI); et
- un moyen de multiplication (4) pour multiplier ladite donnée numérique échantillonnée ajoutée (SiI) par 1/2 pour faire la moyenne de ladite donnée numérique échantillonnée (Sa') et de ladite première donnée numérique échantillonnée retardée (Sd1) et produire une donnée numérique échantillonnée moyenne (Si2), d'où il résulte que deux données numériques échantillonnées ultérieures sont l'objet d'une formation de moyenne.

3. Dispositif d'amélioration du contour d'un signal d'image (CE) selon la revendication 2, comprenant en outre :
- un second moyen à retard (6) pour retarder ladite première donnée numérique échantillonnée retardée (Sd1) suivant la période t et produire une seconde donnée numérique échantillonnée retardée (Sd2), ladite seconde donnée numérique échantillonnée retardée (Sd2) étant retardée d'une période 2t par rapport à ladite donnée numérique échantillonnée; et
un troisième moyen à retard (5) pour retarder ladite donnée numérique échantillonnée moyenne (Si2) suivant la période t pour produire une donnée numérique échantillonnée moyenne retardée (SI), ladite donnée numérique échantillonnée moyenne retardée (SI) étant retardée d'une période 2t par rapport audit signal d'image (Sa'), d'où il résulte que ledit moyen de sélection (7) choisit alternativement l'une ou l'autre de ladite seconde donnée numérique échantillonnée retardée (Sd2) et de ladite donnée numérique échantillonnée moyenne retardée (S1) à chaque période de t et produit ledit signal d'image interpolé (Sb).
